(19) Europäisches Patentamt
European Patent Office
Office européen des brevets

(11) **EP 4 601 414 A1**

(12) **EUROPEAN PATENT APPLICATION**
published in accordance with Art. 153(4) EPC

(43) Date of publication:
**13.08.2025 Bulletin 2025/33**

(21) Application number: **23875230.7**

(22) Date of filing: **05.10.2023**

(51) International Patent Classification (IPC):
*H05B 7/06* (2006.01)    *C04B 35/52* (2006.01)
*C04B 35/622* (2006.01)    *C04B 35/628* (2006.01)
*H05B 7/20* (2006.01)

(52) Cooperative Patent Classification (CPC):
**C04B 35/52; C04B 35/622; C04B 35/628;**
**H05B 7/06; H05B 7/20;** Y02P 10/20

(86) International application number:
**PCT/KR2023/015312**

(87) International publication number:
**WO 2024/076168 (11.04.2024 Gazette 2024/15)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.10.2022 KR 20220128663**

(71) Applicant: POSCO Co., Ltd
**Pohang-si, Gyeongsangbuk-do 37859 (KR)**

(72) Inventors:
• **KANG, Dong Su**
**Pohang-si, Gyeongsangbuk-do 37881 (KR)**

• **PARK, Jae Hoon**
**Gwangju 61706 (KR)**
• **LEE, Sang Beom**
**Pohang-si, Gyeongsangbuk-do 37671 (KR)**
• **PARK, Sang Chae**
**Pohang-si, Gyeongsangbuk-do 37667 (KR)**
• **LEE, Sang Dong**
**Gwangyang-si, Jeollanam-do 57747 (KR)**
• **KIM, Yong In**
**Pohang-si, Gyeongsangbuk-do 37834 (KR)**

(74) Representative: **Meissner Bolte Partnerschaft**
**mbB**
**Patentanwälte Rechtsanwälte**
**Postfach 86 06 24**
**81633 München (DE)**

(54) **COMPOSITION FOR ELECTRODE ROD, ELECTRODE ROD, METHOD FOR MANUFACTURING ELECTRODE ROD, AND METHOD FOR PRODUCING MOLTEN METAL**

(57)    An embodiment of the present invention provides a composition for an electrode rod for manufacturing an electrode member of an electric furnace, wherein the composition may include a first carbon-based material including artificial graphite, an antioxidant material including a material having higher reactivity with oxygen (O) than carbon (C), and a binder.
Therefore, according to embodiments of the present invention, the oxidation resistance of the electrode member provided in the electrode rod of the electric furnace may be improved, and accordingly, the rate at which the electrode member is oxidized may be reduced. Therefore, it is possible to suppress penciling in which the diameter of the electrode member decreases due to an oxidation reaction.

EP 4 601 414 A1

FIG. 7

EP 4 601 414 A1

Description

## TECHNICAL FIELD

The present invention relates to a composition for an electrode rod, an electrode rod, a method for manufacturing an electrode rod, and a method for manufacturing a molten metal, and more specifically, to a composition for an electrode rod capable of improving the oxidation resistance of an electrode member, an electrode rod, a method for manufacturing the electrode rod, and a method for manufacturing a molten metal.

## BACKGROUND ART

Recently, in order to respond to the climate change crisis, carbon neutral technologies that reduce actual carbon dioxide emissions to zero by reabsorbing carbon dioxide emitted by individuals, companies, and organizations are emerging. Accordingly, the steel-making industry is researching and developing hydrogen reduction iron-making process technology in which hydrogen, instead of fossil fuels that generate carbon dioxide, is used to produce direct reduced iron, and then the direct reduced iron is used to produce iron. Once the hydrogen reduction iron-making process technology is commercialized, an electric furnace process may be used to replace not only a blast furnace process that generates a large amount of carbon dioxide but also a basic oxygen furnace process.

An electric furnace is a device that applies electric power to electrode rods and uses heat and arc generated from the electrode rods to melt iron raw materials such as reduced iron or scrap. In addition, there is an electric furnace that uses a self-baking electrode rod as an electrode rod. The self-baking electrode rod is an electrode rod prepared by introducing a composition for an electrode rod containing carbon (C) into a cylindrical case installed to be inserted into an electric furnace, and then baking the composition for an electrode rod by using heat inside the electric furnace and electric power applied to the case.

Meanwhile, the electrode rod may be oxidized by air introduced into the electric furnace and an oxidizing gas generated thereinside. Then, the oxidation reaction may cause penciling in which the diameter of the electrode rod decreases.

When the electrode rod is penciled, heat generation in the electrode rod is reduced, and a region in which arc is generated around the electrode rod is reduced. Therefore, the operation efficiency of dissolving iron raw materials to produce a molten metal may be reduced. In addition, as the electrode rod is penciled, the risk of the electrode rod being broken during an operation increases, and the breakage of the electrode rod becomes a factor that stops the operation or reduces the operation efficiency.

In addition, in order to reduce the above-described penciling of an electrode rod, the amount of a composition for an electrode rod introduced into a case of the electrode rod needs to be increased, or the injection cycle thereof needs to be shortened. In this case, there is a problem in that costs for producing the composition for an electrode rod increase.

(Prior Art Document)

(Patent Document 1) Korean Patent Registration No. 10-2094053

## DISCLOSURE OF THE INVENTION

## TECHNICAL PROBLEM

The present invention provides a composition for an electrode rod capable of reducing the oxidation rate of an electrode member, an electrode rod, a method for manufacturing the electrode rod, and a method for manufacturing a molten metal.

The present invention provides a composition for an electrode rod capable of improving electrical properties, an electrode rod, a method for manufacturing the electrode rod, and a method for manufacturing a molten metal.

## TECHNICAL SOLUTION

An embodiment of the present invention is a composition for an electrode rod for manufacturing an electrode member of an electric furnace, wherein the composition may include a first carbon-based material including artificial graphite, an antioxidant material including a material having higher reactivity with oxygen (O) than carbon (C), and a binder.

In the entire composition for an electrode rod, the content of the first carbon-based material may be 50 wt% to 65 wt%, the content of the antioxidant material may be 1 wt% to 7 wt%, and the content of the binder may be 30 wt% to 43 wt%.

The composition for an electrode rod may include a second carbon-based material including at least one of natural graphite and coke.

In the entire composition for an electrode rod, the content of the first carbon-based material may be 50 wt% to 60 wt%, the content of the antioxidant material may be 1 wt% to 5 wt%, and the content of the binder may be 30 wt% to 40 wt%, and the content of the second carbon-based material may be 1 wt% to 5 wt%.

The composition for an electrode rod may use waste including artificial graphite as the first carbon-based material.

The antioxidant material may include at least one of a metal Al and a metal Si.

The first and second carbon-based materials may be provided in a solid state including a plurality of particles, the antioxidant material may be provided in a liquid state, and the antioxidant material may be coated on surfaces of the particles of the first carbon-based material.

An embodiment of the present invention is an electrode rod installed such that a portion thereof is inserted into a main body of an electric furnace, wherein the electrode rod includes a case having an internal space formed by extending in one direction, and an electrode member formed by inserting a briquet, which includes a first carbon-based material including artificial graphite, an antioxidant material including a material having higher reactivity with oxygen (O) than carbon (C), and a binder, into the case, thereby baking the briquet, and formed such that a portion thereof is positioned inside the case and the rest thereof protrudes to the outside of a lower side of the case.

The antioxidant material may include at least one of a metal Al and a metal Si.

The briquet may include a second carbon-based material including at least one of natural graphite and coke.

A method for manufacturing an electrode rod according to an embodiment of the present invention may include manufacturing a briquet including a first carbon-based material including artificial graphite, an antioxidant material having higher reactivity with oxygen (O) than carbon (C), and a binder, inserting the briquet into a case of an electrode rod installed to be inserted into a main body of an electric furnace, and forming an electrode member by baking the briquet by using heat inside the main body and power applied to the case.

The manufacturing of a briquet may include preparing a composition for an electrode rod by mixing the first carbon-based material, the antioxidant material, and the binder, and assembling the composition for an electrode rod.

The manufacturing of a briquet may include coating the antioxidant material on surfaces of particles of the first carbon-based material, preparing a composition for an electrode rod by mixing the first carbon-based material coated with the antioxidant material, and the binder, and assembling the composition for an electrode rod.

The preparing of a composition for an electrode rod may include preparing a second carbon-based material including at least one of natural graphite and coke, and mixing the first carbon-based material, the antioxidant material, the binder, and the second carbon-based material.

The preparing of a composition for an electrode rod may include preparing a second carbon-based material including at least one of natural graphite and coke, and mixing the first carbon-based material coated with the antioxidant material, the binder, and the second carbon-based material.

A method for manufacturing a molten metal according to an embodiment of the present invention includes inserting raw materials into a main body of an electric furnace, inserting a briquet, which includes a first carbon-based material including artificial graphite, an antioxidant material having higher reactivity with oxygen (O) than carbon (C), and a binder, into a case of an electrode rod installed such that a portion thereof is positioned inside the main body, forming an electrode member in which a portion thereof is positioned inside the case and the rest thereof protrudes to the outside of a lower side of the case by baking the briquet inside the case, and melting a raw material by applying power to the electrode rod, thereby generating heat.

The method may further include reacting the antioxidant material contained in the electrode member with oxygen (O) first, rather than reacting carbon (C) contained in the electrode member with oxygen (O).

The reacting of the antioxidant material with oxygen (O) may include reacting at least one of Al and Si included in the antioxidant material with the oxygen (O).

The briquet may include a second carbon-based material including at least one of natural graphite and coke.

The raw material may include a hydrogen direct reduced iron reduced by hydrogen.

## ADVANTAGEOUS EFFECTS

According to embodiments of the present invention, the oxidation resistance of an electrode member provided in an electrode rod of an electric furnace may be improved, and accordingly, the rate at which the electrode member is oxidized may be reduced. Therefore, it is possible to suppress penciling in which the diameter of the electrode member decreases due to an oxidation reaction.

In addition, it is possible to suppress a decrease in the area and the temperature of a region in which heat is generated in the electrode member by the penciling, or a decrease in the region in which arc is generated around the electrode member. Accordingly, in manufacturing a molten metal by melting a raw material with heat and arc generated from the electrode member, the operation efficiency may be improved.

In addition, since the oxidation resistance of the electrode member is improved, the lifespan of the electrode member may be improved. Accordingly, during an operation of the electric furnace, the amount of a composition for an electrode rod introduced into a case to form the electrode member may be reduced, and the introduction cycle may be lengthened. Therefore, there is an effect of reducing costs due to the introduction of the composition for an electrode rod.

In addition, the electrical resistivity of the electrode member may be lowered. Therefore, the efficiency of heat and arc generation by applied power in an electrode rod may be increased.

## BRIEF DESCRIPTION OF THE DRAWINGS

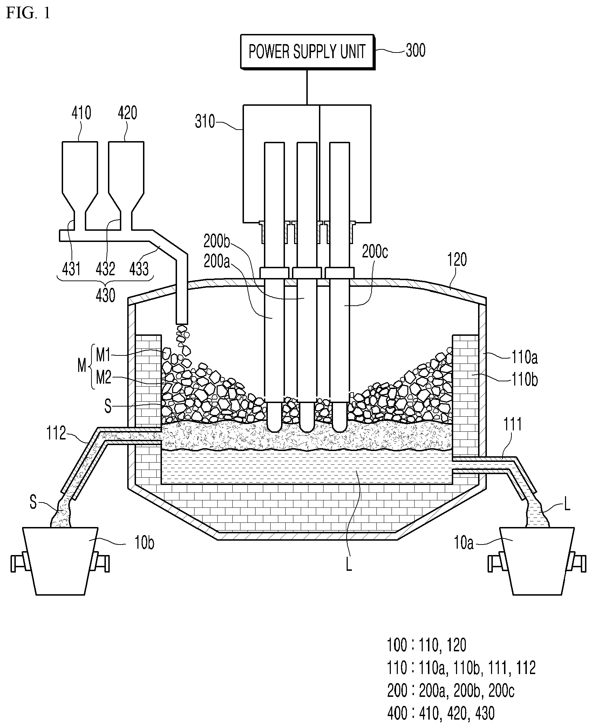

. FIG. 1 is a view schematically illustrating an electric furnace provided with an electrode rod according to an embodiment of the present invention.

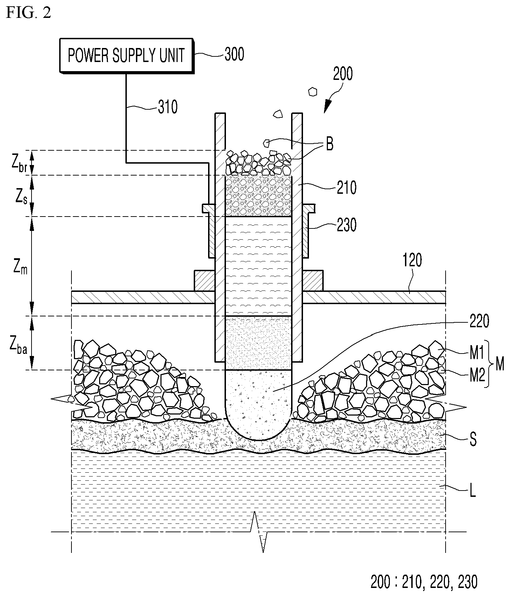

FIG. 2 is a cross-sectional view illustrating a state in which an electrode rod according to an embodiment of the present invention is installed to be inserted into a main body of an electric furnace.

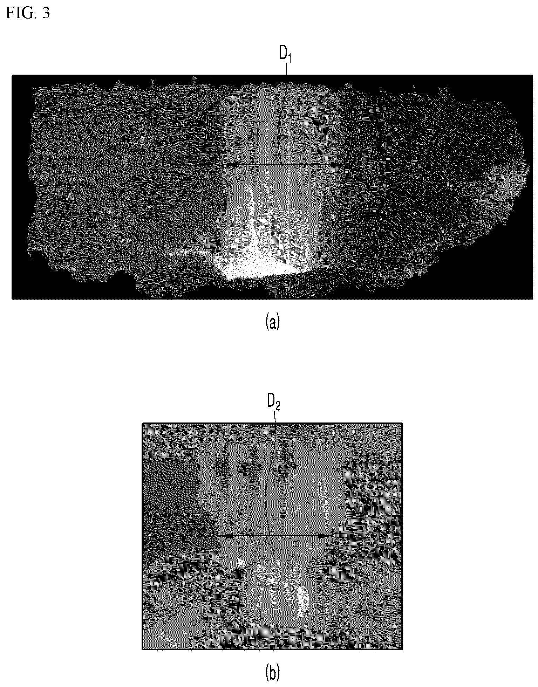

(a) of FIG. 3 is a photograph of an electrode member of an electrode rod before being penciled, and (b) of FIG. 3 is a photograph of an electrode member after being penciled.

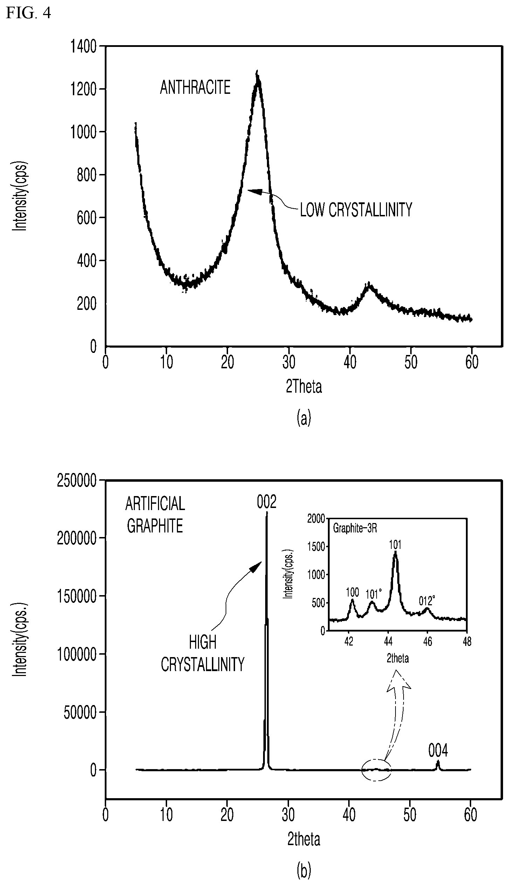

(a) of FIG. 4 shows the result of X-ray diffraction (XRD) analysis of anthracite, and (b) of FIG. 4 shows the result of X-ray diffraction (XRD) analysis of artificial graphite.

FIG. 5 shows the results of an experiment on the oxidation rate of anthracite and artificial graphite.

FIG. 6 is an Ellingham diagram showing the reactivity with oxygen for each metal material.

FIG. 7 is a flowchart for describing a method of manufacturing a briquet by a method according to embodiments of the present invention.

FIG. 8 is a photograph of the microstructure of a briquet manufactured by a method according to a second embodiment of the present invention.

## MODE FOR CARRYING OUT THE INVENTION

Hereinafter, embodiments of the present invention will be described in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. The drawings may be exaggerated to describe the embodiments of the present invention, and like reference numerals in the drawings refer to like elements.

FIG. 1 is a view schematically illustrating an electric furnace provided with an electrode rod according to an embodiment of the present invention.

An electric furnace (Electric Smelting Furnace apparatus) is an apparatus for manufacturing a melt, that is, a molten metal L, by dissolving a raw material M introduced thereinside. Referring to FIG. 1, the electric furnace may include a main body 100 having an internal space capable of processing the raw material M, an electrode rod 200 installed such that a portion thereof is positioned inside the main body 100 to generate heat for melting the raw material M, and a power supply unit 300 connected to the electrode rod 200 to apply power. In addition, the electric furnace may include a raw material supply unit 400 installed to be connected to the main body 100 to introduce the raw material M.

The raw material M introduced into the internal space of the main body 100 may include a first raw material M1 and a second raw material M2. In addition, the first raw material M1 may include, for example, direct reduced iron (DRI). In addition, the second raw material M2 may include a reducing agent, and as a more specific example, the second raw material M2 may include coke. Inside the main body 100, the first raw material M1 and the second raw material M2 are dissolved by heat generated from the electrode rod 200, and the first raw material M1 is reduced by the second raw material M2, thereby manufacturing the molten metal L.

Direct reduced iron may be at least one of low-grade directly reduced iron manufactured using ore having an iron (Fe) content of less than 65 wt% before reduction and high-grade direct reduced iron manufactured using ore having an iron (Fe) content of greater than 65 wt% before reduction. In addition, the direct reduced iron (DRI), which is the first raw material M1, may be direct reduced iron reduced using hydrogen, that is, 'hydrogen direct reduced iron.' Therefore, an electric furnace for manufacturing a molten metal by melting and reducing the hydrogen direct reduced iron, which is the first raw material M1, may be referred to as an 'electric furnace for melting hydrogen direct reduced iron."

In the above, it has been described that the first raw material M1 introduced into the electric furnace includes hydrogen direct reduced iron. However, the first raw material M1 may include direct reduced iron manufactured by being reduced in various manners other than direct reduced iron reduced by using hydrogen.

In addition, the first raw material M1 is not limited to direct reduced iron, and may include scrap having a higher iron (Fe) content than the direct reduced iron. The scrap may be iron scrap having an iron (Fe) content of greater than 70 wt%, more preferably, iron scrap having an iron (Fe) content of 85 wt% to 99 wt%.

The main body 100 may include a furnace body 110 having an internal space and a cover 120 for covering an opening provided on an upper side of the furnace body 110.

The furnace body 110 may have a barrel shape having an internal space and an open upper side. The above-described furnace body 110 may include an outer wall body 110a made of iron scale or a metal and an inner wall body 110b built with a refractory material to surround an inner wall of the outer wall body 110a.

The furnace body 110 may be provided with a first discharge port 111 for discharging the molten metal L and a second discharge port 112 for discharging slag S floating in an upper portion of the molten metal L. Each of the first and second discharge ports 111 and 112 may be provided on a sidewall of the furnace body 110 or may be provided on a lower bottom of the furnace body 110. For example, referring to FIG. 1, the first discharge port 111 may be provided on one sidewall of the furnace body 110, and the second discharge port 112 may be provided on the other sidewall of the furnace body 110. Of course, the first and second discharge ports 111 and 112 are not limited to the above-described positions, but may be provided at various positions capable of discharging the molten metal L and the slag S to the outside.

Containers 10a and 10b capable of respectively accommodating the molten metal L and the slag S are disposed outside the furnace body 110. That is, on the outside of the furnace body 110, the first container 10a may be disposed on a lower side the first discharge port 111, and the second container 10b may be disposed on a lower side of the second discharge port 112. Here, the first container 10a in which the molten metal L discharged from the first discharge port 111 is accommodated may be, for example, a ladle, and the second container 10b in which the slag S discharged from the second discharge port 112 is accommodated may be a slag port.

The cover 120 is installed in an upper portion of the furnace body 110 to close the upper opening of the furnace body 110. In this case, the cover 120 may be made of a refractory material. In addition, the cover 120 may be provided with a hole through which a portion of the electrode rod 200 passes and a hole through which a portion of the raw material supply unit 400 passes. In addition, the cover 120 may further be provided with an introduction port through which the raw material M may be introduced.

The raw material supply unit 400 is a means for supplying the raw material M to the main body 100 of the electric furnace. The raw material supply unit 400 as described above may include, for example, a first hopper 410 in which the first raw material M1 is stored, a second hopper 420 in which the second raw material M2 is stored, and a supplier 430 connected to the first and second hoppers 410 and 420 to introduce the first and second raw materials M1 and M2 into the main body 100.

The supplier 430 may include, for example, a first transfer pipe 431 connected to the first hopper 410, a second transfer pipe 432 connected to the second hopper 420, and a third transfer pipe 433 having one end connected to the first and second transfer pipes 431 and 432 and the other end installed through the cover 120 to be positioned in the internal space of the main body 100. In addition, a valve may be installed on at least one of the first transfer pipe 431, the second transfer pipe 432, and the third transfer pipe 433.

In the above, it has been described that the raw material supply unit 400 includes the first and second hoppers 410 and 420. However, the present invention is not limited thereto, and a hopper in which a raw material other than the first and second raw materials M1 and M2 are stored may be further provided.

In addition, the raw material M is not limited to a raw material introduced using the raw material supply unit 400 as described above, and may also be introduced into the main body 100 through an introduction port provided on the cover 120.

FIG. 2 is a cross-sectional view illustrating a state in which an electrode rod according to an embodiment of the present invention is installed to be inserted into a main body of an electric furnace.

The electrode rod 200 generates heat and arc using applied power and supplies the heat into the main body 100. Here, the power may refer to a voltage or a current, and the heat generated from the electrode rod 200 may include resistance heat generated by the applied power. Then, the heat and arc supplied into the main body 100 by the electrode rod 200 melt or dissolve the raw material M, thereby manufacturing a melt, that is, a molten metal.

The electrode rod 200 may be provided in plurality, and for example, as described in FIG. 1, three electrode rods 200a, 200b, and 200c may be provided. In addition, the plurality of electrode rods 200a, 200b, and 200c may be connected to one power supply unit 300.

In the above, it has been described that the plurality of electrode rods 200a, 200b, and 200c are connected to one power supply unit 300. However, the present invention is not limited thereto, and the power supply unit 300 may be provided in plurality to be connected one-to-one to the plurality of electrode rods 200a, 200b, and 200c. In addition, the number of the electrode rod is not limited to the above-described example, and the electrode rod may be provided as one or in numbers of three or more.

Hereinafter, the configuration of the electrode rod will be described. In this case, the plurality of electrode rods 200a, 200b, and 200c are provided with the same configuration and shape. Accordingly, one electrode rod will be described as an example, and for the convenience of explanation, the reference numeral for the electrode rod will be referred to as "200."

Referring to FIG. 2, the electrode rod 200 may include a case 210 having an internal space, an electrode member 220 formed such that a portion thereof is inserted into the case 210 to generate heat using power and the rest thereof protrudes to the outside of the case 210, and a power supply member 230 mounted on the case 210 to supply power to the case 210. In addition, the electrode rod 200 may include an lifting and lowering device (not shown) connected to the case 210 to lower or lift the case 210.

As illustrated in FIG. 1, the electrode rod 200 is installed such that a portion thereof is positioned inside the main body 100, and the rest thereof is positioned outside the main body 100. That is, the electrode rod 200 may be installed to penetrate the cover 120 in a vertical direction, thereby being partially positioned inside the furnace body 110. Accordingly, a portion of the electrode rod 200 is positioned on a lower side of the cover 120 to be accommodated inside the furnace body 110, and another portion thereof protrudes toward an upper side of the cover 120 to be positioned outside the furnace body 110. Then, the height of the electrode rod 200 is adjusted such that a lower portion thereof is immersed in the slag S floating in an upper portion of a molten metal, or buried in the raw material M piled on an upper portion of the slag S.

The case 210 may have a barrel shape having an internal space. That is, the case 210 may have a tube shape having an internal space extending in a vertical direction, and having an upper side and a lower side, both of which are open. The shape of the case 210 is not particularly limited, but may be, for example, a cylindrical shape having a circular cross-section. In addition, the case 210 may be made of a metal.

As described above, the electrode rod 200 is installed such that a portion thereof is positioned inside the furnace body 110 and the rest thereof is positioned outside the furnace body 110. To this end, the case 210 is installed by vertically penetrating the cover 120 such that a portion thereof is positioned inside the furnace body 110 and the rest thereof is positioned outside the furnace body 110.

The power supply member 230 is a means for transferring power received from the power supply unit 300 to the case 210. As shown in FIG. 2, the power supply member 230 described above may be installed in the case 210 so as to be positioned outside the main body 100, that is, on an upper side of the cover 120. A material of the power supply member 230 is not particularly limited as long as it is a conductor capable of transferring power, but may be made of, for example, a material including copper (Cu).

In addition, a power supply line 310 may be connected between the power supply unit 300 and the power supply member 230. Accordingly, power output from the power supply unit 300 may be transferred to the power supply member 230 via the power supply line 310. In addition, the power transferred to the power supply member 230 may be transferred to the case 210 and then transferred to the electrode member 220 inside the case 210.

As illustrated in FIG. 2, the electrode member 220 is connected to the case 210 such that a portion thereof protrudes to the outside of a lower side of the case 210. That is, the electrode member 220 is connected such that a portion thereof is positioned inside the case 210, and the rest thereof protrudes out of the case 210. The electrode member 220 described above is made of a material including carbon (C), and generates resistance heat when power is applied thereto. In addition, at this time, arc may be generated around the electrode member 220.

The electrode member 220 is a self-baking electrode manufactured by baking a material introduced into the case 210. Hereinafter, for the convenience of explanation, a material introduced into a case of the electrode rod 200 to manufacture or form the electrode member 220 is referred to as a 'composition for electrode rod,'

The electrode member 220 is not connected to the case 210 after being manufactured in a predetermined shape, for example, a rod shape, but is prepared by introducing a composition for an electrode rod into the case 210, and baking the introduced composition for an electrode rod by heat.

Meanwhile, if power transferred to the case 210 is transferred to the electrode member 220, heat is generated in the electrode member 220, and arc is generated around the electrode member 220. Accordingly, the first and second raw materials M1 and M2 inside the main body 100 are melted, thereby manufacturing the molten metal L. At this time, the electrode member 220 is oxidized by air introduced into the main body 100 and by an oxidizing metal generated inside the main body 100, and due to the oxidation reaction, at least one of the length and the diameter of the electrode member 220 decreases. That is, the electrode member 220 is consumed. In addition, the electrode member 220 may also be consumed by the arc generated around the electrode member 220. As described above, the electrode member 220 is a consumable electrode in which at least one of the length and the diameter thereof decreases due to an oxidation reaction and arc.

Therefore, in order for the electrode member 220 to be continuously or consecutively formed while an electric furnace is operated, a composition for an electrode rod for forming the electrode member 220 is introduced into the case 210. The introduced composition for an electrode rod becomes the electrode member 220 in a solid phase through softening, melting, and baking reactions inside the case 210.

The composition for an electrode rod may include a material including carbon (C), and a binder, and the material including carbon may be in the form of a small-sized particle or powder. Accordingly, the material including carbon (C) and the binder are mixed and molded to be manufactured as a briquet (or an oval briquet) B, and the manufactured briquet B is introduced into the case 210.

When the briquet B is introduced into the case 210, the briquet B is baked, and accordingly, the electrode member 220 is manufactured. That is, when power is supplied to the case 210 through the power supply unit 300 and the power supply member 230, the power is transferred to the briquet B introduced into the case 210. Accordingly, resistance heat is generated in the briquet B, and accordingly, the briquet is softened. Then, the briquet softened by the resistance heat generated by the continuously supplied power is dissolved or melted, and thereafter, undergoes a baking reaction to be manufactured as the electrode member 220 in a solid state.

A region inside the main body 100 of the case 210 is high in temperature, and thus, may melt and disappear over time. That is, a lower portion of the case 210 adjacent to the bottom of the main body 100 of the case 210 inserted into the main body 100 melts and disappears. Accordingly, the case 210 is lowered over time while the electric furnace is operated.

In addition, as described above, the electrode member 220 protruding to the lower side of the case 210 is consumed. Accordingly, the briquet B manufactured by assembling the composition for an electrode rod is introduced into the case 210 while lowering the case 210 over time. Accordingly, the electrode member 220 may be continuously formed while the electric furnace is operated, and the electrode member 220 may protrude to the lower side of the case 210.

In addition, to this end, the briquet B is continuously introduced into the case 210 as described above, so that the internal space of the case 210 may be divided into a briquet zone $Z_{br}$, a softening zone $Z_s$, a melting zone $Z_m$, and a baking zone $Z_{ba}$ from an upper side to a lower side into which the briquet B is introduced. That is, an upper space of the electrode member 220 inside the case 210 may be divided into the briquet zone $Z_{br}$ in which the introduced briquet B maintains the solid-phase state, the softening zone $Z_s$ in which the briquet is softened by heat, the melting zone $Z_m$ in which the softened briquet is melted, and the baking zone $Z_{ba}$ in which the melted briquet is baked. In other words, the internal space of the case 210 may be described as including the briquet zone $Z_{br}$, the softening zone $Z_s$, the melting zone $Z_m$, and the baking zone $Z_{ba}$. In this case, since the electrode member 220 is provided after the briquet B is softened, melted, and baked, it may be described that the electrode member 220 is connected to a lower portion of the baking zone $Z_{ba}$.

(a) of FIG. 3 is a photograph of an electrode member of an electrode rod before being penciled, and (b) of FIG. 3 is a photograph of an electrode member after being penciled.

As described above, the electrode member 220 includes carbon (C). In addition, carbon (C) is easily oxidized with oxygen (O). Accordingly, the electrode member 220 may have an oxidation reaction with air introduced into the main body 100 of the electric furnace and an oxidizing gas generated inside the main body 100, for example, $CO_2$ (carbon dioxide), or the like. In addition, when power is applied and heat is generated in the electrode member 220, arc may be generated together. Accordingly, the electrode member 220 may be consumed due to the oxidation reaction and the arc. That is, penciling in which the diameter of the electrode member 220 decreases may occur. Referring to (a) and (b) of FIG. 3, a diameter $D_2$ of the electrode member 220 after penciling is smaller than a diameter $D_1$ of the electrode member 220 before the penciling occurred due to the oxidation reaction and the arc ($D_1 > D_2$). In this case, the consumption of the electrode member 220 due to the oxidation reaction is greater than the consumption of the electrode member 220 due to the arc.

In the event of the penciling in which the diameter of the electrode member 220 decreases, the area of a region in which heat is generated in the electrode member 220 may be reduced, and a region in which arc is generated around the electrode member 220 may be reduced. Accordingly, in manufacturing the molten metal L by melting the raw materials M with the heat and the arc generated from the electrode member 220, the operation efficiency may be degraded.

Therefore, it is necessary to improve the oxidation resistance of the electrode member 220 so that the oxidation reaction is suppressed or prevented. In other words, it is necessary to manufacture the electrode member 220 having improved oxidation resistance. To this end, in embodiments, the electrode member 220 is manufactured by using a first carbon-based material including artificial graphite. That is, a composition for an electrode rod for manufacturing the electrode member 220 includes a first carbon-based material, and the first carbon-based material includes artificial graphite. In addition, the composition for an electrode rod includes an antioxidant material including a material having better oxidation properties than carbon (C), and a binder. In addition, the composition for an electrode rod may further include a second carbon-based material different from the first carbon-based material.

In summary, as shown in Table 1, the composition for an electrode rod may include the first carbon-based material including artificial graphite, the antioxidant material including a material having better oxidation properties than carbon (C), and the binder (first embodiment). In this case, the first carbon-based material may be included in 50 wt% to 65 wt%, the antioxidant material may be included in 1 wt% to 7 wt%, and the binder may be included in 30 wt% to 43 wt%.

[Table 1]

| Classification | First carbon-based material | Antioxidant material | Second carbon-based material | Binder |
|---|---|---|---|---|
| First embodiment | Artificial graphite | At least one of Al and Si | - | Coal tar pitch |
| | 50wt%-65wt% | 1wt%-7wt% | - | 30wt%-43wt% |

(continued)

| Classification | First carbon-based material | Antioxidant material | Second carbon-based material | Binder |
|---|---|---|---|---|
| Second embodiment | Artificial graphite | At least one of Al and Si | Natural graphite | Coal tar pitch |
| | 50wt%-60wt% | 1wt%-5wt% | 1wt%-5wt% | 30wt%-40wt% |
| Third embodiment | Artificial graphite | At least one of Al and Si | Coke | Coal tar pitch+resin |
| | 50wt%-60wt% | 1wt%-5wt% | 1wt%-5wt% | 30wt%-40wt% |
| Fourth embodiment | Artificial graphite | At least one of Al and Si | Natural graphite+coke | Coal tar pitch+resin |
| | 50wt%-60wt% | 1wt%-5wt% | 1wt%-5wt% | 30wt%-40wt% |

In addition, more preferably, the composition for an electrode rod may further include a second carbon-based material including at least one of natural graphite and coke (second and third embodiments). That is, the composition for an electrode rod according to the second embodiment may include natural graphite, and the composition for an electrode rod according to the third embodiment may include coke. Here, the natural graphite used as the second carbon-based material serves to improve the electrical conductivity of the electrode member 220, and the coke serves to improve the strength of the electrode member 220.

In this case, the first carbon-based material may be included in 50 wt% to 60 wt%, the antioxidant material may be included in 1 wt% to 5 wt%, the second carbon-based material may be included in 1 wt% to 5 wt%, and the binder may be included in 30 wt% to 40 wt%.

In addition, the second carbon-based material of the composition for an electrode rod may include both natural graphite and coke (fourth embodiment). In this case, the content of each of the natural graphite and the coke is 1 wt% to 5 wt%, and the sum of the content of the natural graphite and the content of the coke is adjusted to a range of 1 wt% to 5 wt%.

As described above, in the compositions for an electrode rod according to the embodiments, the first carbon-based material is mixed in the highest content of 50 wt% to 65 wt% or 50 wt% to 60 wt%. Accordingly, it can be described that the first carbon-based material is the main material among materials included in the composition for an electrode rod.

Meanwhile, a typical composition for an electrode rod uses anthracite as a carbon-based material. That is, the typical composition for an electrode rod includes anthracite and a binder, wherein the anthracite is included in 60 wt% to 70 wt%, and the binder is included in 30 wt% to 70 wt%. However, anthracite is low in crystallinity, and has a large number of cracks and pores, and thus, is quickly oxidized.

On the other hand, graphite has a hexagonal crystal structure and has high crystallinity. More specifically, graphite has a hexagonal plate-like crystal structure. In addition, artificial graphite has stronger mechanical strength than natural graphite.

Therefore, in the embodiments, graphite is used as a carbon-based material. More specifically, artificial graphite is used as the first carbon-based material, which is the main material. In other words, anthracite, which is typically used as the main carbon-based material, is not used, and artificial graphite is used as an alternative material for the anthracite.

(a) of FIG. 4 shows the result of X-ray diffraction (XRD) analysis of anthracite, and (b) of FIG. 4 shows the result of X-ray diffraction (XRD) analysis of artificial graphite.

Hereinafter, referring to FIG. 4, the crystallinity of anthracite and artificial graphite will be described.

For XRD analysis, a sample made of anthracite and a sample made of artificial graphite were respectively prepared. Then, the XRD analysis was performed on each of the samples, and the results are as shown in FIG. 4.

In the XRD analysis results, the higher the intensity of the highest peak with the largest intensity, and the smaller the half-width of the highest peak, the higher the crystallinity. Comparing the intensity of the highest peak with reference to (a) and (b) of FIG. 4, the highest peak intensity of artificial graphite ((b) of FIG. 4) is higher than that of anthracite ((a) of FIG. 4). More specifically, in the case of anthracite, the intensity of the highest peak is as low as 1,300 counts per second (cps), whereas in the case of artificial graphite, the intensity of the highest peak is about 220,000 cps, which is 160 times higher than that of anthracite. In addition, comparing the half-width of the highest peak, the half-width of the highest peak of the artificial graphite is narrower than that of anthracite.

In addition, the crystal thickness and the crystal length may be calculated from the XRD results as shown in (a) and (b) of FIG. 4. In the case of anthracite, the crystal thickness calculated from the results of (a) of FIG. 4 is 30Å to 80Å, and the crystal length is 50 Å to 120 Å. On the other hand, in the case of artificial graphite, the crystal thickness calculated from the results of (b) of FIG. 4 is 280 Å to 350 Å, and the crystal length is 50 Å to 200 Å. That is, the crystal thickness and the crystal length of artificial graphite are greater than those of anthracite. From the above, it can be seen that the crystallinity of artificial graphite is higher than that of anthracite.

As described above, the crystallinity of artificial graphite is higher than that of anthracite. In addition, the higher the crystallinity, the more stable it is, and therefore, the less reactive with other components. Therefore, it can be seen that the oxidation reactivity of artificial graphite is lower than that of anthracite.

In addition, natural graphite has a hexagonal plate-like crystal structure like artificial graphite. Accordingly, natural graphite has higher crystallinity than anthracite. In addition, natural graphite has lower mechanical strength than artificial graphite.

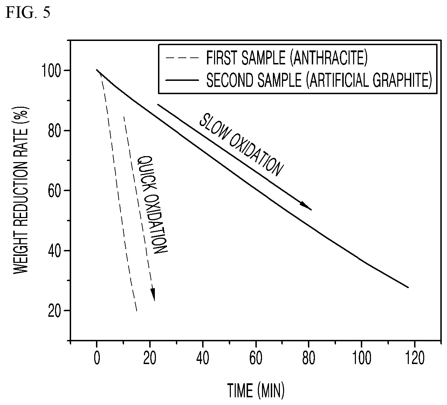

FIG. 5 shows the results of an experiment on the oxidation rate of anthracite and artificial graphite.

Hereinafter, referring to FIG. 5, the oxidation rate of anthracite and artificial graphite are described. In order to determine the oxidation rate of anthracite and artificial graphite, a thermogravimetric analysis experiment was conducted. To this end, the following experiment was conducted. First, a first sample made of anthracite and a second sample made of artificial graphite were prepared. Then, the first and second samples were introduced into a furnace with a temperature adjusted to 700 °C, and air was supplied to the furnace. Thereafter, the weight (weight) of each of the first and second samples over time was measured, and a rate of change in weight was calculated, and the results are shown in FIG. 5. Here, the rate of change in weight may be the ratio of a weight $W_2$ of a sample after being introduced into an electric furnace with respect to a $W_1$ of the sample before being introduced into the electric furnace (refer to Equation 1).

[Equation 1]

$$\text{Weight reduction rate } (\%) = (W_2/W_1) \times 100\%$$

Referring to FIG. 5, the rate at which the weight of the second sample (artificial graphite) decreases is slower than the rate at which the weight of the first sample (anthracite) decreases. From the above, it can be seen that when artificial graphite is used as a composition for an electrode rod, the rate at which the electrode member 220 is oxidized may be slowed down compared to when artificial graphite is used. That is, it can be seen that the oxidation resistance of the electrode member 220 may be improved when the artificial graphite is used compared to when anthracite is used as the composition for an electrode rod.

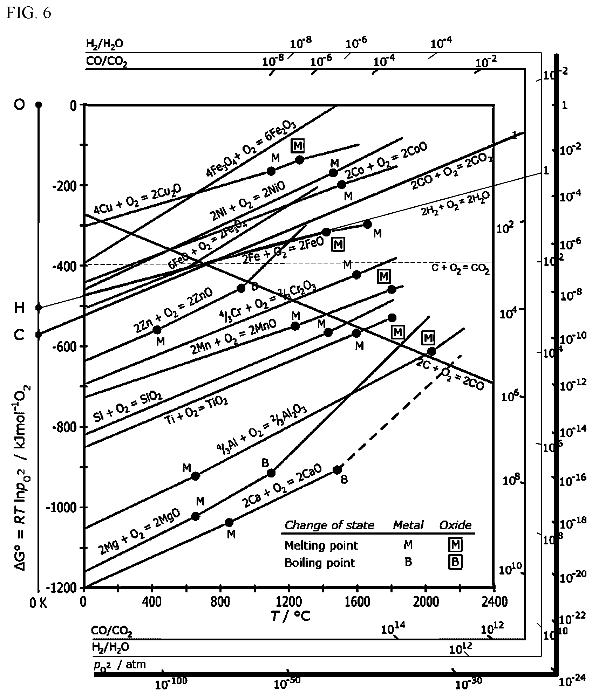

FIG. 6 is an Ellingham diagram showing the reactivity with oxygen for each metal material.

As an antioxidant material, a material having better reactivity with oxygen (O) than carbon (C) is used. In other words, a material capable of delaying an oxidation reaction of carbon by reacting first with oxygen before an oxidation reaction by a reaction between carbon (C) and oxygen (O) is used as an antioxidant material.

Referring to FIG. 6, a material having higher reactivity with oxygen, i.e., oxygen affinity, than carbon (C) includes Zn, Cr, Mn, Si, Ti, Al, Mg, and Ca. Among the above, it is preferable that at least one Al and Si is used as an antioxidant material. This is because the content of at least one of Al and Si is required to be adjusted to a predetermined amount or more in the case of the molten metal L manufactured in the electric furnace. In addition, Al and Si used as the antioxidant material may be a metal. That is, Al and Si may be in a metal state, not an oxide, carbide or nitride. In other words, Al and Si may be a metal Al and a metal Si having a purity of 95% or greater, more preferably 99% or greater.

As described above, in the embodiments, a material having better oxygen affinity, i.e., better oxidation reactivity, than carbon (C), is used as an antioxidant material. As a result, the antioxidant material, e.g., at least one of Al and Si, is first reacted with oxygen before carbon (C) contained in the electrode member 220. Accordingly, the oxidation reaction of carbon (C) contained in the electrode member 220 may be delayed. Here, the carbon (C) contained in the electrode member 220 may be included in artificial graphite, which is the first carbon-based material, and natural graphite, which is the second carbon-based material. In addition, in the composition for an electrode rod for manufacturing the electrode member 220, the first carbon-based material is contained in a large amount of 50 wt% to 65 wt% or 50 wt% to 60 wt%, and the second carbon-based material including natural graphite is contained in an amount of 1 wt% to 5 wt%. In addition, the combined amount of the first and second carbon-based materials is 51 wt% to 65 wt%. Accordingly, the electrode member 220 contains a large amount of carbon (C) compared to other components.

Therefore, when the oxidation reaction of carbon (C) among the components contained in the electrode member 220 is suppressed or delayed, the oxidation of the electrode member 220 may be effectively suppressed.

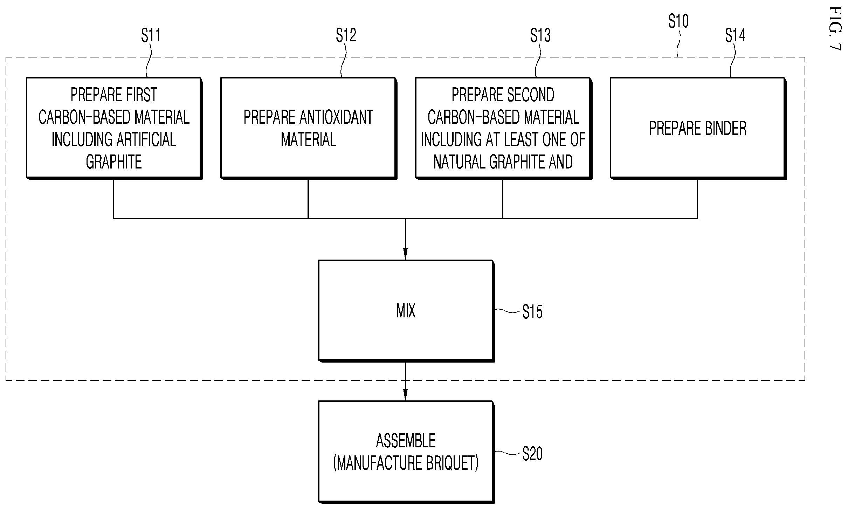

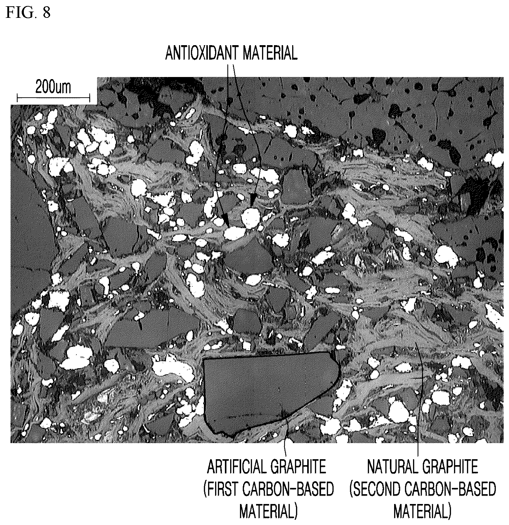

FIG. 7 is a flowchart for describing a method of manufacturing a briquet by a method according to embodiments of the present invention. FIG. 8 is a photograph of the microstructure of a briquet manufactured by a method according to a first embodiment of the present invention.

In order to manufacture a briquet B, a composition for an electrode rod is first prepared S10. That is, a first carbon-based material S11 including artificial graphite is prepared S11, an antioxidant material is prepared S12, and a binder is prepared S14. Then, the first carbon-based material, the antioxidant material, and the binder are mixed S15. As a result, a composition for an electrode rod is prepared S10. That is, the composition for an electrode rod according to the first embodiment is prepared. In this case, each of the first carbon-based material, the antioxidant material, and a second carbon-based material may be in a solid-phase state including solid powder or a plurality of particles.

In addition, the composition for an electrode rod may further include a second carbon-based material S13 including at least one of natural graphite and coke. Therefore, the second carbon-based material may be further included S13 in addition to the first carbon-based material, the antioxidant material, and the binder to prepare the composition for an electrode rod (second and third embodiments).

Artificial graphite may be manufactured by adding a binder to pitch coke or petroleum coke, and then heat-treating the mixture at a high temperature, thereby graphitizing the same. In other words, the artificial graphite may be obtained by processing pitch coke or petroleum coke.

In addition, artificial graphite, which is used as the first carbon-based material, may be newly processed and prepared in the same manner as described above, or may be recycled from discarded artificial graphite (waste artificial graphite). Here, the waste artificial graphite may be recovered from an electrode for electric discharge machining or a crucible and a heater of a silicon wafer (Si wafer) growth device. First, about the electrode for electric discharge machining, when manufacturing a mold, electric discharge machining is performed, and at this time, an electrode made of artificial graphite is used as the electrode for electric discharge machining. In addition, the crucible and the heater provided in the silicon wafer growth device are manufactured using artificial graphite. Therefore, artificial graphite is recovered from at least one of the electrode for electric discharge machining, the crucible, and the heater to be discarded, and is used as the first carbon-based material. As another example, artificial graphite, which is waste generated during the manufacture of at least one of the electrode for electric discharge machining, the crucible, and the heater may be recovered and used as the first carbon-based material. As described above, since artificial graphite, which is waste, is recycled as the first carbon-based material, costs for manufacturing an electrode rod or an electrode member may be reduced.

The antioxidant material may be at least one of Al and Si. In addition, the binder may include coal tar pitch, and may further include a phenol resin.

When the first carbon-based material, the antioxidant material, and the binder are mixed S15 to prepare the composition for an electrode rod according to the first embodiment, the mixing is performed such that the first carbon-based material is contained in 50 wt% to 65 wt%, the antioxidant material is contained in 1 wt% to 7 wt%, and the binder is contained in 30 wt% to 43 wt% (see Table 1).

In addition, when the second carbon-based material is further mixed S13 in addition to the first carbon-based material, the antioxidant material, and the binder to prepare the compositions for an electrode rod according to the second and second embodiments, the mixing is performed such that the first carbon-based material is contained in 50 wt% to 65 wt%, the antioxidant material is contained in 1 wt% to 5 wt%, the binder is contained in 30 wt% to 40 wt%, and the second carbon-based material is contained in 1 wt% to 5 wt% (see Table 1).

In the case of the second embodiment, a material containing natural graphite is used as the second carbon-based material, and in the case of the third embodiment, a material containing coke is used as the second carbon-based material. In addition, in the case of the second embodiment, coal tar pitch may be used as the binder, and in the case of the third embodiment, a mixture of coal tar pitch and a phenol resin may be used as the same. In this case, in the binder according to the third embodiment, the coal tar pitch may be contained in 60 wt% to 70 wt% and the phenol resin may be contained 30 wt% to 40 wt% in the entire binder.

Meanwhile, in the composition for an electrode rod, if the content of the first carbon-based material is less than 50 wt%, the resistance of an electrode member 220 may be high or the strength thereof may be weak. On the contrary, if the content of the first carbon-based material in the composition for an electrode rod is greater than 65 wt%, as the content of at least one of the antioxidant material, the second carbon-based material, and the binder decreases, an effect of reducing the oxidation rate of the electrode member 220 may be insignificant, the resistance thereof may be high, or the strength there of may be weak.

If the content of the antioxidant material is less than 1 wt%, the effect of reducing the oxidation rate of the electrode member 220 may be insignificant. In addition, in a range in which the content of the antioxidant material is greater than 7 wt%, an effect of delaying the oxidation reaction of carbon (C) contained in the electrode member 220 may be insignificant. In addition, in order to manufacture a molten metal to have a desired component content, the content of the antioxidant material in the composition for an electrode rod should be 7 wt% or less. Therefore, the mixing is performed such that the antioxidant material is contained in an amount of 1 wt% to 7 wt%.

If the binder is contained in less than 30 wt%, the strength of a briquet may be weak. On the contrary, if the content of the binder is greater than 43 wt%, the content of other materials is relatively reduced, so that the resistivity of the electrode member may increase, the oxidation rate thereof may increase, or the strength thereof may be degraded.

Therefore, the composition for an electrode rod is prepared by performing mixing such that 50 wt% to 65 wt% of the first carbon-based material, 1 wt% to 7 wt% of the antioxidant material, and 30 wt% to 43 wt% of the binder are contained therein.

In addition, the composition for an electrode rod may further include the second carbon-based material, and at this time, the second carbon-based material is mixed to be contained in 1 wt% to 5 wt%, and the second carbon-based material may include at least one of natural graphite and coke. At this time, in order to further improve the electrical conductivity of the electrode member 220, a second carbon-based material including natural graphite is used, and in order to improve the strength of the electrode member 220, a second carbon-based material including coke is used.

EP 4 601 414 A1

In using the second carbon-based material including natural graphite, for example, if the second carbon-based material is contained in less than 1 wt%, the effect of improving the electrical conductivity of the electrode member 220 may be insignificant. In addition, in using the second carbon-based material including coke is used, for example, if the second carbon-based material is contained in less than 1 wt%, the effect of improving the strength of the electrode member 220 may be insignificant. In addition, if the content of the second carbon-based material including at least one of natural graphite and coke is greater than 7 wt%, the second carbon-based material may not be smoothly mixed with other materials. That is, in the composition for an electrode rod in which the first carbon-based material, the antioxidant material, the binder, and the second carbon-based material are mixed, there may be a case in which the second carbon-based material is not mixed to be evenly distributed, and is clumped on any one side.

Therefore, the mixing is performed such that 50 wt% to 60 wt% of the first carbon-based material, 1 wt% to 5 wt% of the antioxidant material, 30 wt% to 40 wt% of the binder, and 1 wt% to 5 wt% of the second carbon-based material are contained.

When the composition for an electrode rod is prepared, the composition is charged into a molding machine and assembled S20. As a result, the briquet B having a predetermined size is manufactured.

In the above, it has been described that each of the first carbon-based material, the antioxidant material, and the second carbon-based material is prepared in a solid particle or powder state. However, the present invention is not limited thereto, and the antioxidant material may be provided in a liquid phase. In addition, the liquid antioxidant material may be coated on surfaces of particles of the first carbon-based material, and then the first carbon-based material coated with the antioxidant material may be mixed with the second carbon-based material and the binder.

The briquet B manufactured by the above-described method contains the first carbon-based material, the antioxidant material, and the binder. Also, the second carbon-based material may be further included. Referring to FIG. 8, when observing the microstructure of the briquet manufactured using the composition for an electrode rod according to the second embodiment in which the second carbon-based material including natural coke is mixed, it can be confirmed that artificial graphite, which is the first carbon-based material, the antioxidant material, and natural graphite, which is the second carbon-based material are included.

When the briquet B is manufactured, the briquet B is introduced into a case 210 of an electrode rod 200 installed in a main body 100 of an electric furnace. That is, as illustrated in FIG. 2, the briquet B is introduced into an opening on an upper side of the case 210.

The briquet B introduced into the case 210 sequentially undergoes processes of softening, melting, and backing by power applied to the case 210 through a power supply member 230 and heat inside the main body 100, and as a result, the electrode member 220 is formed. In this case, a portion of the electrode member 220 may be formed by extending to protrude to the outside of a lower side of the case 210.

First and second raw materials M1 and M2 charged into the main body 100 are melted or dissolved by heat generated from the electrode member 220 and arc generated around the electrode member 220, and as a result, a molten metal L is manufactured. Then, the manufactured molten metal L is discharged through a first discharge port 111 and then charged into a first container 10a.

Table 2 shows properties of an electrode manufactured by methods according to first to third experimental examples. The first experimental example is an electrode manufactured using a composition for an electrode rod including anthracite and a binder. In addition, the second experimental example is an electrode manufactured using the composition for an electrode rod according to the second embodiment of the present invention, and the third experimental example is an electrode manufactured using the composition for an electrode rod according to the third embodiment of the present invention.

For an experiment, a composition for an electrode rod according to each of the first to third experimental examples was prepared and assembled to prepare a briquet. Then, the briquet according to each of the first to third experimental examples was heat-treated and baked to manufacture an electrode member. In this case, the briquet according to each of the first to third experimental examples was heated at the same temperature and for the same duration.

Then, the density (g/cm$^3$), the electrical resistivity ($\mu\Omega$m), and the bending strength (MPa) were measured for the electrode member according to each of the first to third experimental examples. Here, the bending strength was measured by a three-point bending strength measurement method.

In addition, the oxidation rate is represented by an index, and is represented by a ratio of the oxidation rates of the electrode members according to the second and third experimental examples to the oxidation rate of the electrode member according to the first experimental example.

In addition, each of the electrode members according to the first to third experimental examples as described above was prepared in plurality, and the density, the electrical resistivity, and the bending strength were measured for each of the plurality of electrode members, and an oxidation rate was calculated as an index, and the results are as shown in Table 2.

# EP 4 601 414 A1

[Table 2]

| | Density (g/cm$^3$) | Electrical resistivity ($\mu\Omega$m) | Bending strength (MPa) | Oxidation rate index |
|---|---|---|---|---|
| First Experimental Example | 1.30 or greater, 1.40 or less | 80 or greater, 90 or less | 4.0 or greater, 5.5 or less | 1 |
| Experimental Example 2 | 1.35 or greater, 1.48 or less | 60 or greater, 70 or less | 4.0 or greater, 5.5 or less | 0.5 or greater, 0.6 or less |
| Experimental Example 3 | 1.35 or greater, 1.50 or less | Greater than 70, less than 80 | Greater than 5.5, less than 7.0 | Greater than 0.6, less than 0.7 |

Referring to Table 2, the first experimental example to the third experimental example have a similar level of density. However, the oxidation rates of the second and third experimental examples are slower than that of the first experimental example. That is, the oxidation rate index of the first experimental example is 1, whereas the oxidation rate index of the second experimental example is 0.5 to 0.6, and the oxidation rate index of the third experimental example is greater than 0.6 to 0.7. From the above results, it can be seen if the compositions for an electrode rod according to the embodiments are used, the oxidation rate of the electrode member may be slowed down. That is, it can be seen that oxidation resistance of the electrode member may be improved.

As such, the oxidation rate of the electrode member according to each of the second and third experimental examples is slower than that of the first experimental example because artificial graphite, which has better crystallinity than anthracite, was used as the first carbon-based material. In addition, the oxidation reaction of carbon (C) was delayed because a material having better oxidation reactivity than carbon (C) was used as the antioxidant material.

Comparing the electrical resistivity, the resistivity of each of the second and third experimental examples is lower than that of the first experimental example. That is, the electrical conductivity of each of the second and third experimental examples is higher than that of the first experimental example. If the electrical conductivity of an electrode member is high due to small electrical resistivity, arc may be generated around the electrode member, and the arc may be generated in a uniform distribution. Therefore, when raw materials are dissolved by heat of the arc to produce a molten metal, the molten metal may be produced in a uniform amount around an electrode rod.

In addition, comparing the second experimental example and the third experimental example, the electrical resistivity of the second experimental example using natural graphite as the second carbon-based material is lower than that of the third experimental example. In addition, the bending strength of the third experimental example using coke as the second carbon-based material is higher than that of the second experimental example. From the above results, it can be seen that if natural graphite is used as the second carbon-based material, the electrical resistivity of the electrode member may further be lowered, and if coke is used, the strength of the electrode member may be further improved.

As described above, according to the embodiments of the present invention, the oxidation resistance of an electrode member provided in an electrode rod of an electric furnace may be improved, and accordingly, the rate at which the electrode member is oxidized may be reduced. Therefore, it is possible to suppress penciling in which the diameter of the electrode member decreases due to an oxidation reaction.

In addition, it is possible to suppress a decrease in the area and the temperature of a region in which heat is generated in the electrode member by the penciling, or a decrease in the region in which arc is generated around the electrode member. Accordingly, in manufacturing a molten metal by melting a raw material with heat and arc generated from the electrode member, it is possible to improve the operation efficiency.

In addition, since the oxidation resistance of the electrode member is improved, the lifespan of the electrode member may be improved. Accordingly, during an operation of the electric furnace, the amount of a composition for an electrode rod introduced into a case to form the electrode member may be reduced, and the introduction cycle may be lengthened. Therefore, there is an effect of reducing costs due to the introduction of the composition for an electrode rod.

In addition, the electrical resistivity of the electrode member may be lowered. Therefore, the efficiency of heat and arc generation by applied power in an electrode rod may be increased.

## INDUSTRIAL APPLICABILITY

According to embodiments of the present invention, the oxidation resistance of an electrode member provided in an electrode rod of an electric furnace may be improved, and accordingly, the rate at which the electrode member is oxidized may be reduced. Therefore, it is possible to suppress penciling in which the diameter of the electrode member decreases due to an oxidation reaction.

13

**EP 4 601 414 A1**

**Claims**

1. A composition for an electrode rod for manufacturing an electrode member of an electric furnace, the composition comprising a first carbon-based material including artificial graphite, an antioxidant material including a material having higher reactivity with oxygen (O) than carbon (C), and a binder.

2. The composition for an electrode rod of claim 1, wherein in the entire composition for an electrode rod, the content of the first carbon-based material is 50 wt% to 65 wt%, the content of the antioxidant material is 1 wt% to 7 wt%, and the content of the binder is 30 wt% to 43 wt%.

3. The composition for an electrode rod of claim 1, further comprising a second carbon-based material including at least one of natural graphite and coke.

4. The composition for an electrode rod of claim 1, wherein in the entire composition for an electrode rod, the content of the first carbon-based material is 50 wt% to 60 wt%, the content of the antioxidant material is 1 wt% to 5 wt%, and the content of the binder is 30 wt% to 40 wt%, and the content of the second carbon-based material is 1 wt% to 5 wt%.

5. The composition for an electrode rod of claim 2 or claim 4, wherein waste including artificial graphite is used as the first carbon-based material.

6. The composition for an electrode rod of claim 2 or claim 4, wherein the antioxidant material comprises at least one of a metal Al and a metal Si.

7. The composition for an electrode rod of claim 2 or claim 4, wherein the first and second carbon-based materials are provided in a solid state including a plurality of particles, the antioxidant material is provided in a liquid state, and the antioxidant material is coated on surfaces of the particles of the first carbon-based material.

8. An electrode rod installed such that a portion thereof is inserted into a main body of an electric furnace, the electrode rod comprising:

   a case having an internal space formed by extending in one direction; and
   an electrode member formed by inserting a briquet, which includes a first carbon-based material including artificial graphite, an antioxidant material including a material having higher reactivity with oxygen (O) than carbon (C), and a binder, into the case, thereby baking the briquet, and formed such that a portion thereof is positioned inside the case and the rest thereof protrudes to the outside of a lower side of the case.

9. The electrode rod of claim 8, wherein the antioxidant material comprises at least one of a metal Al and a metal Si.

10. The electrode rod of claim 8, wherein the briquet comprises a second carbon-based material including at least one of natural graphite and coke.

11. A method for manufacturing an electrode rod, the method comprising:

    manufacturing a briquet including a first carbon-based material including artificial graphite, an antioxidant material having higher reactivity with oxygen (O) than carbon (C), and a binder;
    inserting the briquet into a case of an electrode rod installed to be inserted into a main body of an electric furnace; and
    forming an electrode member by baking the briquet by using heat inside the main body and power applied to the case.

12. The method of claim 11, wherein the manufacturing of a briquet comprises:

    preparing a composition for an electrode rod by mixing the first carbon-based material, the antioxidant material, and the binder; and
    assembling the composition for an electrode rod.

13. The method of claim 11, wherein the manufacturing of a briquet comprises:

14

coating the antioxidant material on surfaces of particles of the first carbon-based material;
preparing a composition for an electrode rod by mixing the first carbon-based material coated with the antioxidant material, and the binder; and
assembling the composition for an electrode rod.

14. The method of claim 12, wherein the preparing of a composition for an electrode rod comprises:

preparing a second carbon-based material including at least one of natural graphite and coke; and
mixing the first carbon-based material, the antioxidant material, the binder, and the second carbon-based material.

15. The method of claim 13, wherein the preparing of a composition for an electrode rod comprises:

preparing a second carbon-based material including at least one of natural graphite and coke; and
mixing the first carbon-based material coated with the antioxidant material, the binder, and the second carbon-based material.

16. A method for manufacturing a molten metal, the method comprising:

inserting raw materials into a main body of an electric furnace;
inserting a briquet, which includes a first carbon-based material including artificial graphite, an antioxidant material having higher reactivity with oxygen (O) than carbon (C), and a binder, into a case of an electrode rod installed such that a portion thereof is positioned inside the main body;
forming an electrode member in which a portion thereof is positioned inside the case and the rest thereof protrudes to the outside of a lower side of the case by baking the briquet inside the case; and
melting a raw material by applying power to the electrode rod, thereby generating heat.

17. The method of claim 16, further comprising reacting the antioxidant material contained in the electrode member with oxygen (O) first, rather than reacting carbon (C) contained in the electrode member with oxygen (O).

18. The method of claim 17, wherein the reacting of the antioxidant material with oxygen (O) comprises reacting at least one of Al and Si included in the antioxidant material with the oxygen (O).

19. The method of claim 16, wherein the briquet comprises a second carbon-based material including at least one of natural graphite and coke.

20. The method of any one of claims 16 to 19, wherein the raw material comprises a hydrogen direct reduced iron reduced by hydrogen.

FIG. 1

POWER SUPPLY UNIT — 300

410  420

310

200b
200a     200c     120

M { M1
M { M2
S

110a
110b

112    111

S    L

10b    10a

L

431  432  433
430

100 : 110, 120
110 : 110a, 110b, 111, 112
200 : 200a, 200b, 200c
400 : 410, 420, 430

FIG. 2

POWER SUPPLY UNIT — 300

200 : 210, 220, 230

FIG. 3

(a)

(b)

FIG. 4

(a)

(b)

FIG. 5

FIG. 6

FIG. 7

S10

S11 PREPARE FIRST CARBON-BASED MATERIAL INCLUDING ARTIFICIAL GRAPHITE

S12 PREPARE ANTIOXIDANT MATERIAL

S13 PREPARE SECOND CARBON-BASED MATERIAL INCLUDING AT LEAST ONE OF NATURAL GRAPHITE AND

S14 PREPARE BINDER

S15 MIX

S20 ASSEMBLE (MANUFACTURE BRIQUET)

FIG. 8

**EP 4 601 414 A1**

## INTERNATIONAL SEARCH REPORT

| International application No. |
|---|
| **PCT/KR2023/015312** |

| A. | CLASSIFICATION OF SUBJECT MATTER |
|---|---|

**H05B 7/06**(2006.01)i; **C04B 35/52**(2006.01)i; **C04B 35/622**(2006.01)i; **C04B 35/628**(2006.01)i; **H05B 7/20**(2006.01)i

According to International Patent Classification (IPC) or to both national classification and IPC

| B. | FIELDS SEARCHED |
|---|---|

Minimum documentation searched (classification system followed by classification symbols)

H05B 7/06(2006.01); C08L 5/00(2006.01); C10L 5/04(2006.01); C10L 5/14(2006.01); C22B 4/00(2006.01); F27D 11/08(2006.01); H05B 3/03(2006.01); H05B 3/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기로(electric furnace), 전극봉(electrode), 인조흑연(artificial graphite), 산화 방지 재료(oxidation resistant material), 천연흑연(natural graphite), 코크스(cokes)

| C. | DOCUMENTS CONSIDERED TO BE RELEVANT |
|---|---|

| Category* | Citation of document, with indication, where appropriate, of the relevant passages | Relevant to claim No. |
|---|---|---|
| DY | KR 10-2094053 B1 (IM, Jeoung Gyu) 26 March 2020 (2020-03-26)<br>See paragraphs [0022]-[0025]; claims 1-3; and figures 3-5. | 1,3,8-20 |
| DA | | 2,4-7 |
| Y | KR 10-0419169 B1 (RESEARCH INSTITUTE OF INDUSTRIAL SCIENCE & TECHNOLOGY) 18 February 2004 (2004-02-18)<br>See claim 1; and figure 2. | 1,3,8-20 |
| Y | KR 10-2425269 B1 (POSCO) 25 July 2022 (2022-07-25)<br>See paragraphs [0049]-[0052]; and figure 1. | 3,10,14-15,19 |
| A | KR 20-0189927 Y1 (LEE, Chan Il et al.) 15 July 2000 (2000-07-15)<br>See claim 1; and figure 1. | 1-20 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 January 2024** | **05 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/015312**

C.    DOCUMENTS CONSIDERED TO BE RELEVANT

| Category* | Citation of document, with indication, where appropriate, of the relevant passages | Relevant to claim No. |
|---|---|---|
| A | US 2012-0248385 A1 (FERRARI, Sandro et al.) 04 October 2012 (2012-10-04)<br>See claims 12-17. | 1-20 |

## INTERNATIONAL SEARCH REPORT
### Information on patent family members

International application No.

**PCT/KR2023/015312**

| Patent document cited in search report | | | Publication date (day/month/year) | Patent family member(s) | | | Publication date (day/month/year) |
|---|---|---|---|---|---|---|---|
| KR | 10-2094053 | B1 | 26 March 2020 | KR | 10-2017-0006005 | A | 17 January 2017 |
| KR | 10-0419169 | B1 | 18 February 2004 | KR | 10-2003-0052904 | A | 27 June 2003 |
| KR | 10-2425269 | B1 | 25 July 2022 | KR | 10-2021-0079547 | A | 30 June 2021 |
| KR | 20-0189927 | Y1 | 15 July 2000 | | None | | |
| US | 2012-0248385 | A1 | 04 October 2012 | AU | 2010-333058 | A1 | 05 July 2012 |
| | | | | AU | 2010-333058 | B2 | 10 April 2014 |
| | | | | CN | 102726120 | A | 10 October 2012 |
| | | | | CN | 102726120 | B | 20 August 2014 |
| | | | | EP | 2514269 | A1 | 24 October 2012 |
| | | | | EP | 2514269 | B1 | 04 September 2013 |
| | | | | EP | 2651184 | A1 | 16 October 2013 |
| | | | | EP | 2651184 | B1 | 14 May 2014 |
| | | | | ES | 2437443 | T3 | 10 January 2014 |
| | | | | ES | 2485920 | T3 | 14 August 2014 |
| | | | | HK | 1177582 | A1 | 23 August 2013 |
| | | | | IT | 1396948 | B1 | 20 December 2012 |
| | | | | IT | MI20092203 | A1 | 17 June 2011 |
| | | | | JP | 2013-514613 | A | 25 April 2013 |
| | | | | JP | 5735533 | B2 | 17 June 2015 |
| | | | | KR | 10-2012-0092715 | A | 21 August 2012 |
| | | | | PL | 2514269 | T3 | 30 April 2014 |
| | | | | PL | 2651184 | T3 | 31 October 2014 |
| | | | | RU | 2012129981 | A | 27 January 2014 |
| | | | | RU | 2572823 | C2 | 20 January 2016 |
| | | | | UA | 109538 | C2 | 10 September 2015 |
| | | | | US | 9131538 | B2 | 08 September 2015 |
| | | | | WO | 2011-073153 | A1 | 23 June 2011 |
| | | | | ZA | 201204261 | B | 25 September 2013 |

Form PCT/ISA/210 (patent family annex) (July 2022)

**EP 4 601 414 A1**

REFERENCES CITED IN THE DESCRIPTION

**Patent documents cited in the description**

- KR 102094053